Europäisches Patentamt

(19) European Patent Office

Office européen des brevets

(11) Numéro de publication: **0 116 491**
**B1**

(12) **FASCICULE DE BREVET EUROPÉEN**

(45) Date de publication du fascicule du brevet:
14.10.87

(51) Int. Cl.⁴: **G 02 B 27/22**

(21) Numéro de dépôt: **84400083.6**

(22) Date de dépôt: **16.01.84**

(54) **Appareil pour visionner une série de vues stéréoscopiques disposées par couples sur un support pour former une stéréocarte en soi connue.**

(30) Priorité: **19.01.83 FR 8300777**

(43) Date de publication de la demande:
**22.08.84 Bulletin 84/34**

(45) Mention de la délivrance du brevet:
**14.10.87 Bulletin 87/42**

(84) Etats contractants désignés:
**AT BE CH DE GB IT LI LU NL SE**

(56) Documents cité:
**FR-A-1 547 722**
**US-A-4 253 732**
**US-A-4 357 073**

(73) Titulaire: **STEREOSCOPES LESTRADE et Cie. S.A.,
10, avenue des Acacias, F-65500 Vic- en- Bigorre
(FR)**

(72) Inventeur: **Vitrac, Jean- Pierre, 128, Boulevard
Blanqui, F-75013 Paris (FR)**

(74) Mandataire: **CABINET BONNET- THIRION, 95
Boulevard Beaumarchais, F-75003 Paris (FR)**

EP 0 116 491 B1

## Description

La présente invention vise un appareil pour visionner une série de vues stéréoscopiques disposées par couples sur une carte pour former une stéréocarte en soi connue.

On rappellera brièvement qu'une stéréocarte est constituée d'un support relativement rigide, par exemple en carton, auquel est associée une série de couples de vues photographiques alignés sur une double colonne en regard de fenêtres ménagées à cet effet dans le support.

On a bien déjà proposé des appareils permettant de visionner de telles stéréocartes, mais les appareils connus présentent l'inconvénient d'un encombrement non négligeable. Il en résulte des problèmes de stockage, ainsi que des frais appréciables lorsque les appareils en cause doivent être expédiés, ces frais tenant principalement au fait qu'il est nécessaire de prévoir un conditionnement approprié afin d'assurer une protection efficace contre les chocs pouvant survenir au cours des manutentions.

La présente invention se propose de fournir un appareil, de réalisation simple et robuste, et dont l'encombrement est notablement réduit comparativement aux appareils actuellement connus.

Un appareil selon l'invention pour visionner une série de vues stéréoscopiques disposées par couples de vues en colonnes sur une stéréocarte en soi connue, se caractérise en ce qu'il comprend un corps quadrangulaire globalement plat avec, de part et d'autre d'un axe de symétrie, deux paires de gouttieres superposées, à savoir, une première paire de gouttières formant glissière pour la stéréocarte et une seconde paire de gouttières recevant une plaque portant une optique constituée de deux oculaires espacés en correspondance avec chaque colonne de vues, ladite plaque comportant des lignes d'articulation, et une partie au moins susceptible de coulissement dans la seconde paire de gouttières formant glissière, de sorte à occuper soit une position déployée d'utilisation, où les lentilles sont placées dans un plan parallèle à la face frontale, à une distance appropriée de celle-ci, en regard d'une paire de fenêtres ménagées dans le corpe, soit une position repliée pour laquelle la plaque est à plat et suit ladite face frontale.

Un tel appareil se présente donc, à l'état plié, comme un produit plat, d'où il résulte une série d'avantages comparativement à la technique antérieure.

Un premier avantage réside dans le fait que l'appareil peut être expédié par courrier postal sous enveloppe ordinaire, et ce, en l'absence d'un quelconque conditionnement spécialement adapté.

Un second avantage concerne le stockage grandement facilité, en raison du faible encombrement de l'appareil à l'état plié.

Un troisième avantage est perçu chez l'utilisateur où l'appareil en non utilisation peut être rangé aisément, tout en offrant la possibilité d'une mise en oeuvre pratiquement instantanée par déploiement de la plaque porte-optique.

En d'autres termes, un appareil selon la présente invention résout maints problèmes jusqu'ici posés avec les appareils connus.

D'autres avantages de l'invention ressortiront d'ailleurs de la description qui va suivre donnée à titre d'exemple en référence aux dessins annexés dans lesquels:

la figure 1 est une vue en perspective d'un appareil selon l'invention à l'état plié;

la figure 2 est une vue en coupe transversale suivant la ligne II-II de la figure 1;

la figure 3 est une vue analogue à la figure 1, l'appareil étant montré à l'état déployé;

la figure 4 est une vue en coupe transversale selon la ligne IV-IV de la figure 3;

la figure 5 est une coupe partielle selon la ligne V-V de la figure 4.

Suivant la forme de réalisation choisie et représentée, l'appareil selon l'invention comprend un corps profilé 9 globalement plat avec une face frontale 10 et une face dorsale 11. Le corps 9 présente en plan, et dans l'exemple représenté une forme rectangulaire, dont les deux côtés longitudinaux sont formés par des bourrelets 12, 13, saillants par rapport à la face frontale; chacun des bourrelets est aménagé avec une paire de gouttières superposées respectivement 14 et 15, les gouttières étant prévues sur l'intérieur du bourrelet, de sorte que celles-ci se trouvent disposées de part et d'autre d'une ligne longitudinale de symétrie du corps profilé 9.

Les gouttières inférieures 14 sont destinées à former une glissière à une stéréocarte en soi connue indiquée dans son ensemble par "S", tandis que les gouttières supérieures forment glissière à au moins une partie coulissante d'une plaque 16 formant porte-optique.

On remarque qu'un tel corps est avantageusement en matière moulable, et peut être obtenu par tronçonnage d'une bande elle-même réalisée par extrusion.

La plaque porte-optique précitée 16 comporte des articulations formées par des plis 17 à 20, s'étendant transversalement au corps, les plis définissant cinq panneaux 21 à 25, le panneau 21 étant dit central, les panneaux adjacents 22, 23 au panneau précédent, étant dits latéraux, et les panneaux 24, 25, adjacents aux panneaux latéraux étant dits d'extrémité.

Les panneaux d'extrémité 24, 25 présentent une largeur "1" telle qu'ils sont emboîtes dans les gouttières supérieures 15, tandis que les panneaux respectivement central 21, et latéraux 22, 23 ont une largeur "$1_1$ "un peu inférieure à la distance séparant les bords terminaux libres des gouttières supérieures 15.

Dans l'exemple de réalisation représenté, le panneau d'extrémité 25 est fixé par ses parties terminales dans les gouttières supérieures 15, tandis que l'autre panneau d'extrémité 25 est monté coulissant dans ces gouttières formant glissière.

Le panneau central 21 porte les oculaires constitués ici par de simples lentilles 30, 31, emboîtées dans deux trous ménagés à cet effet dans ledit panneau, les lentilles étant écartées l'une de l'autre d'une distance correspondant à l'écart moyen des yeux, et qui est en correspondance avec l'écartement des couples de vues montées sur la stéréocarte.

Les lentilles précitées sont fixées au panneau de toute manière appropriée, par exemple collage ou verrouillage mutuel. Entre les lentilles précitées 30, 31, le panneau central 21 est découpé pour former une ouverture 21A, à bords parallèles et cette ouverture s'étend aussi, en partie, dans les panneaux latéraux 22, 23, par des découpes sensiblement en demi-cercles 22A, 23A; l'ouverture ainsi aménagée est destinée à former un dégagement pour le nez de l'utilisateur.

Les couples de vues stéréoscopiques doivent être convenablement placés à l'aplomb des lentilles pour obtenir le résultat escompté. En vue d'éviter les tâtonnements pour placer correctement chaque couple de vues en regard des oculaires, l'appareil suivant l'invention comporte des moyens propres à permettre un positionnement rapide et correct desdits couples de vues.

A cet effet, la stéréocarte "S" comporte, entre chaque couple de vues, au moins une ouverture adaptée à coopérer avec une languette aménagée dans le corps avec une extrémité légèrement en saillie par rapport au plan de la face frontale 10 du corps. Suivant l'exemple illustré, la stéréocarte "S" comporte, entre les colonnes de vues stéréoscopiques, et entre chaque couple de vues deux ouvertures 40 de part et d'autre de l'axe de symétrie du corps 9 adaptées à coopérer avec une paire de languettes correspondantes 42, aménagées dans le corps 9, lesdites languettes étant déformables élastiquement et ayant chacune une partie terminale 42A (voir figure 5) adaptée à pénétrer dans les ouvertures 40 lorsque celles-ci sont présentées en regard desdites parties terminales.

On comprend que la position correcte de la stéréocarte "S" par rapport aux oculaires 30, 31 est ainsi aisément obtenue pour chaque couple de vues.

En non utilisation l'appareil est peu encombrant du fait que la plaque 16 est repliée et suit sensiblement la face frontale 10 du corps.

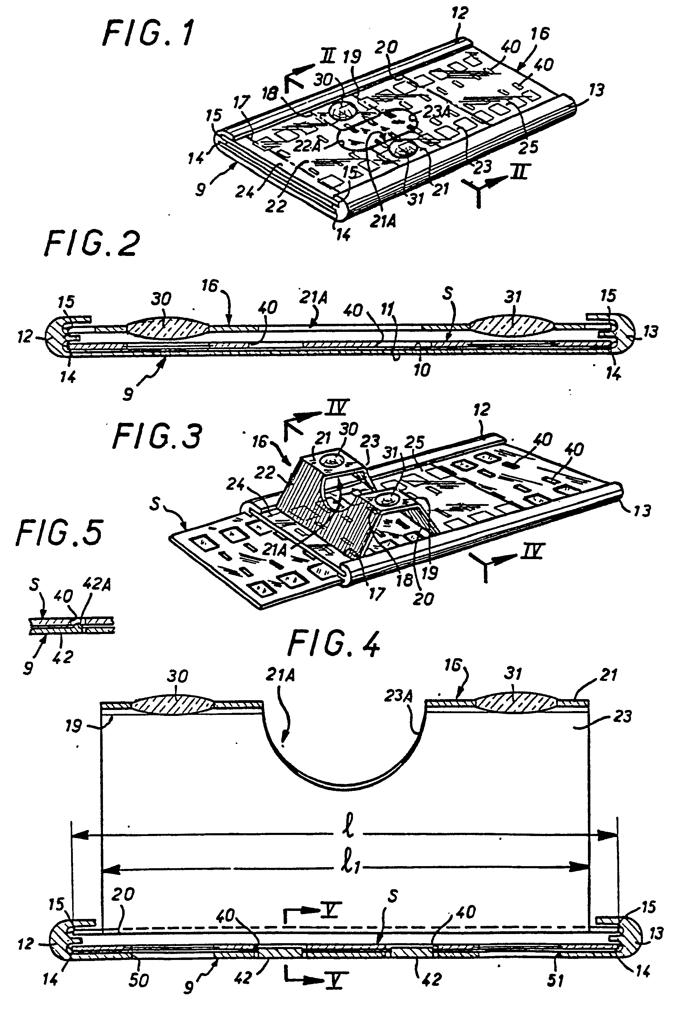

Le passage de l'appareil de sa position de non utilisation, comme il est illustré par la figure 1, à une position d'utilisation est effectué pratiquement instantanément, en faisant coulisser le panneau d'extrémité 25 dans la première paire de gouttières 15, formant glissière supérieure. Au cours de ce coulissement les lignes de pliages transversales 17 à 20, formant articulations, permettent aux panneaux respectivement central 21 et latéraux 22, 23 de se déployer au-dessus de la face frontale 10 du corps 9, ce qui correspond à une position d'utilisation telle qu'illustrée par la figure 3; la stéréocarte "S" peut alors être coulissée pas à pas dans la glissière inférieure et présenter ainsi successivement un couple de vues en regard de fenêtres 50, 51 aménagées dans le corps 9 en regard des oculaires 30, 31 en position d'utilisation. On observe que dans la position d'utilisation, le panneau central 21 portant les oculaires est parallèle à la face frontale 10 du corps.

La focale des oculaires est suffisamment grande pour rendre en principe un réglage inutile; néanmoins on peut prévoir, si on le désire, la possibilité de rendre les oculaires ajustables de manière à être en mesure, le cas échéant, d'effectuer un réglage fin de la position de ceux-ci, par exemple en prévoyant un montage mobile des oculaires sur le panneau central 21, au moyen d'une bague mobile ou analogue.

En outre, la partie visible de la plaque 16 porte-optique, ainsi que le corps 9 de l'appareil, et notamment les faces frontale et dorsale de ce dernier, peuvent être mises à profit pour recevoir des inscriptions ou tout autre motif à des fins publicitaires ou de communication.

Bien entendu, l'invention n'est pas limitée au mode de réalisation choisi et représenté qui peut recevoir diverses modifications sans pour autant sortir du cadre de l'invention. Ainsi, par exemple, au lieu des languettes 42 découpées dans le corps il est possible de prévoir de simples saillies en forme de picots pour coopérer avec des lumières ou de simples dépressions prévues à cet effet dans la stéréocarte. La paire de fenêtres 50, 51 ménagées dans le corps 9 pour l'éclairement du couple de vues en regard des oculaires 30, 31 pourront avantageusement être garnies de plaquettes diffusantes.

**Revendications**

1. Appareil pour visionner une série de vues stéréoscopiques disposées par couples de vues en colonnes sur une stéréocarte en soi connue, caractérisé en ce qu'il comprend un corps quadrangulaire globalement plat (9) avec, de part et d'autre d'un axe de symétrie, deux paires de gouttières superposées (14, 15), à savoir, une première paire de gouttières (14) formant glissière pour la stéréocarte (S), et une seconde paire de gouttières (15) recevant une plaque (16) portant une optique constituée de deux oculaires espacés (30, 31) en correspondance avec chaque colonne de vues, ladite plaque (16) comportant des lignes d'articulation (17 à 20), et au moins une partie (25) susceptible de coulissement dans la seconde paire de gouttières (15) formant glissière, de sorte à occuper soit une position déployée d'utilisation, où les oculaires (30, 31) sont placés dans un plan parallèle à la face frontale (10), à une distance appropriée de celle-ci, en regard d'une paire de fenêtres (50, 51) ménagées dans le corps (9), soit une position repliée, pour laquelle la plaque est à plat et suit ladite face frontale.

2. Appareil suivant la revendication 1, caractérisé en ce que le corps (9) est rectangulaire, avec des côtés longitudinaux comportant chacun un bourrelet (12, 13) dans lesquels sont ménagées les paires de gouttières précitées (14, 15).

3. Appareil suivant l'une quelconque des revendications précédentes, caractérisé en ce que les deux paires de gouttières (14, 15) sont disposées d'un même côté du corps (9).

4. Appareil suivant l'une quelconque des revendications précédentes, caractérisé en ce que les lignes d'articulation (17 à 20) ménagées dans la plaque sont orientées transversalement par rapport à celle-ci, elles sont parallèles, et forment un panneau central (21), deux panneaux latéraux (22, 23) adjacents au panneau central, et deux panneaux d'extrémité (24, 25) respectivement adjacents aux panneaux latéraux.

5. Appareil suivant la revendication 4, caractérisé en ce que le panneau central (21) porte les oculaires (30, 31).

6. Appareil suivant la revendication 4, caractérisé en ce qu'un panneau d'extrémité (25) est monté à coulissement dans une glissière (15) grâce à une largeur (1) appropriée, l'autre panneau d'extrémité (24) est fixé au corps (9), tandis que le panneau central (21) et les panneaux latéraux (22, 23) présentent une largeur ($1_1$) un peu inférieure à la distance séparant les bords terminaux libres des gouttières supérieures (15), de sorte que lesdits panneaux (21, 22, 23) sont dégagés des gouttières.

7. Appareil suivant l'une quelconque des revendications 4 à 6, caractérisé en ce que le panneau central (21) comporte, entre les oculaires (30, 31), une ouverture centrale (55) qui s'étend en partie dans les panneaux latéraux adjacents (22, 23).

8. Appareil suivant l'une quelconque des revendications 4 à 7, caractérisé en ce que les oculaires (30, 31) sont montés réglables en position sur le panneau central (21) à l'aide d'une bague mobile ou analogue.

9. Appareil suivant l'une quelconque des revendications précédentes, caractérisé en ce que le corps (9) comporte des moyens propres à positionner la stéréocarte pour visionner un couple de vues, cesdits moyens étant avantageusement constitués par au moins une, mais de préférence deux protubérances (42A) ménagées en un emplacement déterminé du corps (9), aptes à coopérer avec des évidements (40) ménagés dans la stéréocarte entre chaque couple de vues.

10. Appareil suivant l'une quelconque des revendications précédentes, caractérisé en ce que le corps (9) est obtenu par extrusion en bande d'une matière plastique, tronçonnée à longueur déterminée.

## Patentansprüche

1. Gerät zum Betrachten einer Reihe von Stereoansichten, die als Stereopaare in Reihen auf einer an sich bekannten Stereokarte angeordnet sind, gekennzeichnet durch einen im wesentlichen flachen viereckigen Körper (9), der, zu beiden Seiten einer Symmetrieachse, zwei Paare sich überlagernder Rinnenprofile (14, 15) aufweist, nämlich ein erstes Paar von Rinnenprofilen (14), die eine Gleitschiene für die Stereokarte (S) bilden und ein zweites Paar von Rinnenprofilen (15), die eine Platte (16) aufnehmen, welche eine Optik trägt, die aus zwei unter Abstand angeordneten Okularen (30, 31) entsprechend jeder Ansichtreihe gebildet ist, wobei diese Platte (15) Gelenklinien (17 bis 20) umfaßt, und wenigstens ein Teil (25) vorgesehen ist, der in der Lage ist, in dem zweiten Paar von die Gleitschiene bildenden Rinnenprofilen (15) derart zu gleiten, daß entweder eine entfaltete Benutzungsstellung eingenommen wird, wo die Okulare (30, 31) in einer Ebene parallel zur Stirnseite (10) unter einem geeigneten Abstand hierzu gegenüber einem Paar von im Körper (9) ausgesparten Fenstern (50, 51) angeordnet sind, oder eine zusammengefaltete Stellung einnehmen, in der die Platte flach ist und deren Stirnfläche folgt.

2. Gerät nach Anspruch 1, dadurch gekennzeichnet, daß der Körper (9) rechteckig ist, wobei Längsseiten jeweils eine Wulstausbildung (12, 13) umfassen, in denen die Paare von genannten Rinnenprofilen (14, 15) ausgespart oder angeordnet sind.

3. Gerät nach einem der vorhergehenden Ansprüche, dadurch gekennzeichnet, daß die beiden Rinnenprofilpaare (14, 15) auf ein und der gleichen Seite des Körpers (9) angeordnet sind.

4. Gerät nach einem der vorhergehenden Ansprüche, dadurch gekennzeichnet, daß die Gelenklinien (17-20), die in der Platte vorgesehen sind, quer bezüglich dieser orientiert sind, parallel verlaufen und ein zentrales Feld (21), zwei seitliche Felder (22, 23), benachbart dem zentralen Feld sowie zwei Endfelder (24, 25) bilden, die jeweils den seitlichen Feldern benachbart sind.

5. Gerät nach Anspruch 4, dadurch gekennzeichnet, daß das zentrale Feld (21) die Okulare (30, 31) trägt.

6. Gerät nach Anspruch 4, dadurch gekennzeichnet, daß ein Endfeld (25) gleitverschieblich in einer Gleitschiene (15) dank einer geeigneten Breite (1) gelagert ist, wobei das andere Endfeld (24) am Körper (9) befestigt ist, während das zentrale Feld (21) sowie die seitlichen Felder (22, 23) eine Breite ($1_1$) aufweisen, die etwas kleiner als die die freien Endränder der oberen Rinnen (15) trennende Entfernung derart ist, daß diese Felder (21, 22, 23) von den Rinnenprofilausbildungen freigegeben sind.

7. Gerät nach einem der Ansprüche 4 bis 6, dadurch gekennzeichnet, daß das zentrale Feld (21) zwischen den Okularen (30, 31) eine mittige Öffnung (55) aufweist, die sich zum Teil in die benachbarten seitlichen Felder (22, 23) hinein erstreckt.

8. Gerät nach einem der Ansprüche 4 bis 7, dadurch gekennzeichnet, daß die Okulare (30, 31) in ihrer Lage verstellbar auf dem mittleren Feld (21) mittels einer beweglichen Unterlegscheibe oder dergleichen ausgebildet sind.

9. Gerät nach einem der vorhergehenden Ansprüche, dadurch gekennzeichnet, daß der Körper (9) Einrichtungen umfaßt, die geeignet sind, die Stereokarte zum Betrachten eines Stereopaares zu positionieren, wobei diese Einrichtungen vorteilhaft durch wenigstens einen, vorzugsweise jedoch zwei Vorsprünge (42A) gebildet sind, die an einem bestimmten Ort des Körpers (9) angeordnet und so ausgebildet sind, daß sie mit Ausnehmungen (40) zusammenwirken, die in der Stereokarte zwischen jedem Stereopaar vorgesehen sind.

10. Gerät nach einem der vorhergehenden Ansprüche, dadurch gekennzeichnet, daß der Körper (9) durch Extrusion eines Bandes aus auf bestimmte Länge geschnittenem Kunststoffmaterial, insbesondere Plastmaterial, erhältlich ist.

**Claims**

1. An apparatus for viewing a series of stereoscopic views disposed in pairs in columns on a stereocard known per se, characterised in that it comprises a generally flat quadrangular body (9) having, on either side of an axis of symmetry, two pairs of superposed channels (14, 15), namely, a first pair of channels (14) forming a slideway for the stereocard (S), and a second pair of channels (15) receiving a plate (16) carrying optical means comprising two spaced eyepieces (30, 31) in register with each column of views, the said plate (16) comprising hinge lines (17 to 20), and at least one part (25) adapted to slide in the second pair channels (15) forming a slideway, so as to occupy either a deployed operative position in which the eyepieces (30, 31) lie in a plane parallel to and at an appropriate distance from the front surface (10) opposite a pair of windows (50, 51) formed in the body (9), or ion a folded position in which the plate lies flat and-runs along follows the said front surface.

2. An apparatus according to claim 1, characterised in that the body (9) is rectangular, with longitudinal sides each having a bead (12, 13) in which the aforesaid pairs of channels (14, 15) are disposed.

3. An apparatus according to either of the preceding claims, characterised in that the two pairs of channels (14, 15) are disposed on the same side of the body (9).

4. An apparatus according to any one of the preceding claims, characterised in that the hinge lines (17 to 20) formed in the plate are oriented transversely relative thereto, they are parallel and form a central panel (21), two lateral panels (22, 23) adjacent the central panel, and two end panels (24, 25) adjacent the lateral panels respectively.

5. An apparatus according to claim 4, characterised in that the central panel (21) carries the eyepieces (30, 31).

6. An apparatus according to claim 4, characterised in that an end panel (25) is slidingly mounted in a slideway (15) by virtue of a suitable width ($1$), the other end panel (24) is fixed to the body (9), while the central panel (21) and the lateral panels (22, 23) have a width ($1_1$) slightly less than the distance separating the free end edges of the upper channels (15), so that the said panels (21, 22, 23) are out of engagement with the channels.

7. An apparatus according to any one of claims 4 to 6, characterised in that the central panel (21) comprises between the eyepieces (30, 31), a central opening (55) which extends partially into the adjacent lateral panels (22, 23).

8. An apparatus according to any one of claims 4 to 7, characterised in that the eyepieces (30, 31) are adjustably mounted in position on the central panels (21) by means of a mobile ring or the like.

9. An apparatus according to any one of preceding claims, characterised in that the body (9) comprises means adapted to position the stereocard for viewing a pair of views, the said means being advantageously constituted by at least one, but preferably two protuberances (42A) formed at a predetermined location of the body (9), adapted to cooperate with depressions (40) formed on the stereocard between each pair of views.

10. An apparatus according to any one of the preceding claims, characterised in that the body (9) is obtained by extrusion of a plastic material into a strip, cut to a predetermined length.

*FIG.1*

*FIG.2*

*FIG.3*

*FIG.5*

*FIG.4*